# EUROPEAN PATENT APPLICATION

(11) **EP 4 529 327 A1**
(43) Date of publication of application: **26.03.2025**
(21) Application number: 22946109.0
(22) Date of filing: 13.06.2022
(51) Int. Cl.: H04W 72/12

(54) **DATA TRANSMISSION METHOD AND APPARATUS, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2022/098448
(87) International publication number: WO 2023/240408

(57) **Abstract**

The present disclosure provides a data transmission method and apparatus, and a storage medium. The data transmission method comprises: determining a first data transmission direction corresponding to a first sub-band configured or indicated by a base station for a terminal during a first time unit; wherein the first time unit is a time unit with a variable data transmission direction pre-configured by the base station; determining a second data transmission direction of the first time unit indicated by the base station by means of a slot format indicator (SFI); in response to determining that the first data transmission direction is different from the second data transmission direction, determining a first behavior of the terminal during the first time unit; and executing the first behavior during the first time unit. The present disclosure effectively resolves the problem of a conflict between a first data transmission direction of a sub-band during a time unit having variable data transmission direction and a second data transmission direction indicated by a base station by means of an SFI, thereby improving the feasibility of full-duplex communication.

## Description

### TECHNICAL FIELD

The present disclosure relates to the field of communication and in particular to a method for data transmission, an apparatus for data transmission and storage medium.

### BACKGROUND

**In** the Release-18 (Rel-18) duplex enhancement project, research is conducted on how to realize base-station-side duplex operation. For the Rel-18 duplex base station, it can schedule different terminals on semi-static flexible symbol at the same time to perform uplink and downlink transmission, which can be specifically implemented by one of the following manners.

**In** a first manner, by explicit signaling, UpLink (UL) subband or DownLink (DL) subband is configured on the semi-static flexible symbol, where the UL subband and DL subband are respectively used for uplink transmission and downlink transmission.

**In** a second manner, the duplex terminal is indicated by scheduling to perform transmitting and reception on the semi-static flexible symbol, that is, the duplex operation is transparent for the duplex terminal at this time.

For the semi-static flexible symbol, the base station can further change a transmission direction based on Slot Format Indication (SFI), for example, indicate the semi-static flexible symbol as DL or UL or dynamic flexible.

At this time, the transmission direction indicated by the SFI may be different from a transmission direction indicated or configured by the base station for the duplex terminal. By now, there is no solution available to solve the problem of how to handle the conflict of the transmission directions indicated by SFI and base station.

### SUMMARY

To overcome problems in the related art, one or more embodiments of the present disclosure provide a method for data transmission, an apparatus for data transmission, and a storage medium.

According to a first aspect of the embodiments of the present disclosure, there is provided a method for data transmission, performed by a terminal and including:
determining a first data transmission direction corresponding to a first subband and configured or indicated by a base station for the terminal on a first time unit, where the first time unit is a time unit, with data transmission direction being flexible, preconfigured by the base station;
determining a second data transmission direction, for the first time unit, indicated by the base station through a slot format indication (SFI);
in response to determining that the first data transmission direction is different from the second data transmission direction, determining a first behavior of the terminal in the first time unit; and
performing the first behavior in the first time unit.

In an embodiment, determining the first behavior of the terminal in the first time unit includes:
determining that the terminal neglects an indication of the SFI in the first time unit, and performing, based on the first data transmission direction, data transmission on the first subband.

In an embodiment, determining the first behavior of the terminal in the first time unit includes:
in response to first information transmitted on the first subband being indicated or scheduled by the base station through a dynamic signaling, determining that the terminal neglects an indication of the SFI in the first time unit, and performing, based on the first data transmission direction, data transmission on the first subband.

In an embodiment, the dynamic signaling is any one of:
downlink control information (DCI); and
media access control control element (MAC CE).

In an embodiment, performing the first behavior in the first time unit includes any one of:
in response to the SFI indicating the second data transmission direction as downlink and the first data transmission direction configured or indicated by the base station being uplink, neglecting the indication of the SFI and transmitting data on the first subband;
in response to the SFI indicating the second data transmission direction as uplink and the first data transmission direction configured or indicated by the base station being downlink, neglecting the indication of the SFI and receiving data on the first subband;
in response to the SFI indicating the second data transmission direction as flexible and the first data transmission direction configured or indicated by the base station being uplink, neglecting the indication of the SFI and transmitting data on the first subband; and
in response to the SFI indicating the second data transmission direction as flexible and the first data transmission direction configured or indicated by the base station being downlink, neglecting the indication of the SFI and receiving data on the first subband.

In an embodiment, determining the first behavior of the terminal in the first time unit includes:
performing, based on the second data transmission direction indicated by the SFI, data transmission and discarding data transmission configured or indicated by the base station on the first subband.

In an embodiment, determining the first behavior of the terminal in the first time unit includes:
in response to the first information transmitted on the first subband being semi-statically configured by the base station through a radio resource control (RRC) signaling, performing, based on the second data transmission direction indicated by the SFI, data transmission and discarding the data transmission configured or indicated by the base station on the first subband.

In an embodiment, performing the first behavior in the first time unit includes any one of:
in response to the SFI indicating the second data transmission direction as downlink and the first data transmission direction configured or indicated by the base station being uplink, determining that the terminal receives data based on the indication of the SFI in the first time unit, and discarding an uplink channel transmitted on the first subband;
in response to the SFI indicating the second data transmission direction as uplink and the first data transmission direction configured or indicated by the base station being downlink, determining that the terminal transmits data based on the indication of the SFI in the first time unit, and discarding a downlink channel transmitted by the base station on the first subband;
in response to the SFI indicating the second data transmission direction as flexible and the first data transmission direction configured or indicated by the base station being uplink, not transmitting or receiving data in the first time unit; and
in response to the SFI indicating the second data transmission direction as flexible and the first data transmission direction configured or indicated by the base station being downlink, not transmitting or receiving data in the first time unit.

According to a second aspect of the embodiments of the present disclosure, there is provided a method for data transmission, performed by a base station and including:
determining a first data transmission direction corresponding to a first subband and configured or indicated for a terminal on a first time unit, where the first time unit is a time unit, with data transmission direction being flexible, preconfigured by the base station;
indicating, by a slot format indication (SFI), a second data transmission direction in the first time unit;
in response to determining that the first data transmission direction is different from the second data transmission direction, determining a second behavior of the base station in the first time unit; and
performing the second behavior in the first time unit.

In an embodiment, determining the second behavior of the base station in the first time unit includes:
determining that the base station performs data transmission on the first subband based on the first data transmission direction in the first time unit.

In an embodiment, determining the second behavior of the base station in the first time unit includes:
in response to the base station, by a dynamic signaling, indicating or scheduling first information transmitted on the first subband, determining that the base station performs data transmission on the first subband based on the first data transmission direction in the first time unit.

In an embodiment, the dynamic signaling is any one of:
downlink control information (DCI); and
media access control control element (MAC CE).

In an embodiment, performing the second behavior in the first time unit includes any one of:
in response to the SFI indicating the second data transmission direction as downlink and the first data transmission direction configured or indicated by the base station being uplink, receiving data on the first subband;
in response to the SFI indicating the second data transmission direction as uplink and the first data transmission direction configured or indicated by the base station being downlink, transmitting data on the first subband;
in response to the SFI indicating the second data transmission direction as flexible and the first data transmission direction configured or indicated by the base station being uplink, receiving data on the first subband; and
in response to the SFI indicating the second data transmission direction as flexible and the first data transmission direction configured or indicated by the base station being downlink, transmitting data on the first subband.

In an embodiment, determining the second behavior of the base station in the first time unit includes:
determining that the base station performs data transmission based on the second data transmission direction in the first time unit.

In an embodiment, determining the second behavior of the base station in the first time unit includes:
in response to the base station, by a radio resource control (RRC) signaling, semi-statically configuring the first information transmitted on the first subband, determining that the base station performs data transmission based on the second data transmission direction in the first time unit.

In an embodiment, performing the second behavior in the first time unit includes any one of:
in response to the SFI indicating the second data transmission direction as downlink and the first data transmission direction configured or indicated by the base station being uplink, transmitting data on the first subband;
in response to the SFI indicating the second data transmission direction as uplink and the first data transmission direction configured or indicated by the base station being downlink, receiving data on the first subband;
in response to the SFI indicating the second data transmission direction as flexible and the first data transmission direction configured or indicated by the base station being uplink, not expecting to transmit or receive specified data in the first time unit, where the specified data is data, for transmission, indicated by the base station before transmitting the SFI; and
in response to the SFI indicating the second data transmission direction as flexible and the first data transmission direction configured or indicated by the base station being downlink, not expecting to transmit or receive the specified data in the first time unit.

According to third aspect of the embodiments of the present disclosure, there is provided an apparatus for data transmission, applied to a terminal and including:
a first determination module, configured to determine a first data transmission direction corresponding to a first subband and configured or indicated by a base station for the terminal on a first time unit, where the first time unit is a time unit, with data transmission direction being flexible, preconfigured by the base station;
a second determination module, configured to determine a second data transmission direction, for the first time unit, indicated by the base station through a slot format indication (SFI);
a third determination module, configured to, in response to determining that the first data transmission direction is different from the second data transmission direction, determine a first behavior of the terminal in the first time unit; and
a first performing module, configured to perform the first behavior in the first time unit.

According to fourth aspect of the embodiments of the present disclosure, there is provided an apparatus for data transmission, applied to a base station and including:
a second performing module, configured to determine a first data transmission direction corresponding to a first subband and configured or indicated for a terminal on a first time unit, where the first time unit is a time unit, with data transmission direction being flexible, preconfigured by the base station;
a third performing module, configured to indicate, by a slot format indication (SFI), a second data transmission direction in the first time unit;
a fourth determination module, configured to, in response to determining that the first data transmission direction is different from the second data transmission direction, determine a second behavior of the base station in the first time unit; and
a fourth performing module, configured to perform the second behavior in the first time unit.

According to fifth aspect of the embodiments of the present disclosure, there is provided a computer-readable storage medium, storing computer programs thereon, where the computer programs, when executed by a processor, cause the processor to perform the method for data transmission of any one of the embodiments of the first aspect.

According to sixth aspect of the embodiments of the present disclosure, there is provided a computer-readable storage medium, storing computer programs thereon, where the computer programs, when executed by a processor, cause the processor to perform the method for data transmission of any one of the embodiments of the second aspect.

According to seventh aspect of the embodiments of the present disclosure, there is provided an electronic device, including: a processor; and a memory storing instructions executable by the processor; where the instructions, when executed by the processor, cause the processor to perform the method for data transmission of the terminal side.

According to eighth aspect of the embodiments of the present disclosure, there is provided an electronic device, including: a processor; and a memory storing instructions executable by the processor; where the instructions, when executed by the processor, cause the processor to perform the method for data transmission of the base station side.

The embodiments of the present disclosure provide technical solutions that may include the following beneficial effects.

In the embodiments of the present disclosure, a base station can schedule or indicate a first data transmission direction corresponding to a first subband for a terminal on a first time unit, and further, the base station can also indicate a second data transmission direction of the first time unit by an SFI. The first time unit may be a time unit, with data transmission direction being flexible, preconfigured by the base station. If the first data transmission direction is different from the second data transmission direction, the terminal and the base station may determine a first behavior and a second behavior in the first time unit respectively and perform corresponding behaviors. The present disclosure effectively solves the problem of the conflict of the first data transmission direction of the subband on the time unit with flexible data transmission direction and the second data transmission direction indicated by the base station through the SFI, improving the duplex communication feasibility.

It should be understood that the above generation descriptions and subsequent detailed descriptions are only illustrative and explanatory rather than limiting of the present disclosure.

### BRIEF DESCRIPTION OF THE DRAWINGS

The drawings herein incorporated into the specification and constituting a part of the specification illustrate the embodiments consistent with the present disclosure and together with the specification, serve to interpret the principle of the present disclosure.
FIG. 1 is a schematic flowchart illustrating a method for data transmission according to an embodiment of the present disclosure.
FIG. 2 is a schematic flowchart illustrating a method for data transmission according to another embodiment of the present disclosure.
FIG. 3 is a schematic flowchart illustrating a method for data transmission according to yet another embodiment of the present disclosure.
FIG. 4A is a schematic flowchart illustrating a method for data transmission according to still another embodiment of the present disclosure.
FIG. 4B is a schematic flowchart illustrating a method for data transmission according to still another embodiment of the present disclosure.
FIG. 5 is a schematic flowchart illustrating a method for data transmission according to still another embodiment of the present disclosure.
FIG. 6 is a schematic flowchart illustrating a method for data transmission according to still another embodiment of the present disclosure.
FIG. 7 is a schematic flowchart illustrating a method for data transmission according to still another embodiment of the present disclosure.
FIG. 8A is a schematic flowchart illustrating a method for data transmission according to still another embodiment of the present disclosure.
FIG. 8B is a schematic flowchart illustrating a method for data transmission according to still another embodiment of the present disclosure.
FIG. 9A is a schematic diagram illustrating a slot structure for time division multiplexing according to an embodiment of the present disclosure.
FIG. 9B is a schematic diagram illustrating a slot structure for time division multiplexing according to another embodiment of the present disclosure.
FIG. 10 is a schematic diagram illustrating another slot structure for time division multiplexing according to yet another embodiment of the present disclosure.
FIG. 11 is a schematic diagram illustrating another slot structure for time division multiplexing according to still another embodiment of the present disclosure.
FIG. 12 is a block diagram illustrating an apparatus for data transmission according to an embodiment of the present disclosure.
FIG. 13 is a block diagram illustrating an apparatus for data transmission according to another embodiment of the present disclosure.
FIG. 14 is a structural schematic diagram illustrating a device for data transmission according to an embodiment of the present disclosure.
FIG. 15 is a structural schematic diagram illustrating a device for data transmission according to another embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise. It will also be understood that as used herein, the term "and/or" is and includes any or all combinations of one or more of the associated listed items.

It will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if" may be interpreted as "while ..." or "when ..." or "in response to a determination".

In the Rel-18 duplex enhancement project, research will be conducted on the duplex solution. Specifically, a network-side device can perform data reception and transmitting at the same time within one slot. As one possible solution, a network, on a semi-static flexible symbol, schedules or indicates a duplex terminal to perform data transmitting or reception. But for the semi-static flexible symbol, the network-side can indicate its transmission direction as UL or DL or dynamic flexible by Slot Format Indication (SFI). When a transmission direction indicated by the SFI is in conflict with a data/signal transmission direction indicated by a base station, there is now no clear solution on how the terminal should handle.

In a New Radio (NR) system, a base station carries tdd-UL-DL-ConfigurationCommon by System Information Block1 (SIB1) so as to configure a cell-level Time Division Duplex (TDD) UL-DL configuration. Additionally, if the base station configures tdd-UL-DL-ConfigurationDedicated carried by a Radio Resource Control (RRC) signaling, the TDD UL-DL configuration can be jointly determined by both. The TDD UL-DL configuration includes the following types of time domain resources: semi-static DL symbol; semi-static UL symbol; and semi-static flexible symbol.

The transmission direction of the semi-static DL symbol and semi-static UL symbol cannot be changed whereas the transmission direction of the semi-static flexible symbol can be adjusted by SFI dynamically, for example, indicated as UL, DL or flexible.

In a protocol, the transmission direction indicated by the SFI can be defined as follows:
for the UL symbol indicated by the SFI, the terminal does not expect the transmission direction scheduled by the base station is in conflict with it but only expect to transmit uplink on it;
for the DL symbol indicated by the SFI, the terminal does not expect the transmission direction scheduled by the base station is in conflict with it but only expect to receive downlink on it;
for the flexible symbol indicated by the SFI, the terminal does not expect to perform any transmitting and reception on it before receiving the indication of the base station.

If the transmission direction indicated by the SFI is different from the transmission direction indicated or configured by the base station for the duplex terminal, there is now no relevant solution.

In order to address the above technical problem, the present disclosure provides a method for data transmission, apparatus and storage medium. The method for data transmission of the present disclosure will be firstly described below from terminal side.

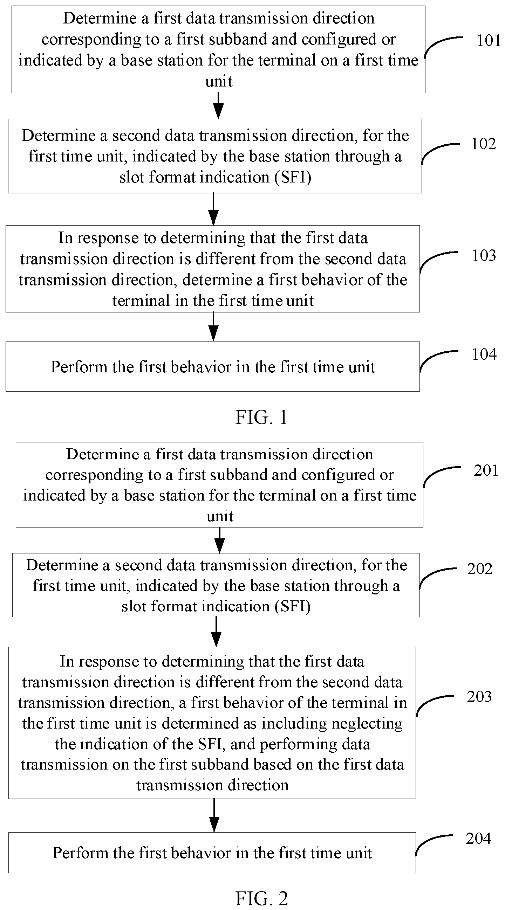

An embodiment of the present disclosure provides a method for data transmission. As shown in FIG. 1, it is a flowchart illustrating a method for data transmission according to an embodiment. The method may be performed by a terminal. It should be noted that the terminal in the present disclosure has half duplex or full duplex capability, which is not limited herein. The method includes the following steps 101 to 104.

At step 101, a first data transmission direction corresponding to a first subband and configured or indicated by a base station for the terminal on a first time unit is determined.

In an embodiment of the present disclosure, the first time unit is a time unit, with data transmission direction being flexible in, preconfigured by the base station. There may be one or more first time units, which is not limited herein.

In one possible implementation, the first time unit is a semi-static flexible symbol configured by the base station through a Radio Resource Control (RRC) signaling.

In an embodiment of the present disclosure, the first data transmission direction corresponding to the first subband may be uplink or downlink, that is, the base station can configure or indicate an uplink subband or a downlink subband for the terminal in the first time unit.

In an embodiment of the present disclosure, the first time unit is a semi-static flexible symbol on which the first subband may be UL subband or DL subband. The first subband may be configured by the base station through an explicit signaling, or obtained by the terminal in an implicit manner, which is not limited herein.

At step 102, a second data transmission direction, for the first time unit, indicated by the base station through a slot format indication (SFI) is determined.

In an embodiment of the present disclosure, the base station may, by the SFI, indicate the second data transmission direction of the first time unit as UL, or DL or dynamic flexible.

It should be noted that the execution sequence of the steps 101 and 102 is not limited in the present disclosure, that is, the step 101 may be executed before the step 102 or the step 102 is executed before the step 101.

At step 103, in response to determining that the first data transmission direction is different from the second data transmission direction, a first behavior of the terminal in the first time unit is determined.

In an embodiment of the present disclosure, if the first data transmission direction is different from the second data transmission direction, the terminal may, based on a protocol-defined rule, determine the first behavior of the terminal in the first time unit.

At step 104, the first behavior is performed in the first time unit.

In the above embodiments, the problem that the first data transmission direction of the subband on the time unit with flexible data transmission direction is in conflict with the second data transmission direction indicated by the base station through the SFI can be effectively solved, improving the duplex communication feasibility.

In some optional embodiments, as shown in FIG. 2, it is a flowchart illustrating a method for data transmission according to an embodiment. The method may be performed by a terminal and the terminal may have half duplex or full duplex capability. The method includes the following steps 201 to 204.

At step 201, a first data transmission direction corresponding to a first subband and configured or indicated by a base station for the terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

In an embodiment of the present disclosure, the first data transmission direction corresponding to the first subband may be uplink or downlink, that is, the base station can configure or indicate an uplink subband or a downlink subband for the terminal in the first time unit.

At step 202, a second data transmission direction, for the first time unit, indicated by the base station through a slot format indication (SFI) is determined.

In an embodiment of the present disclosure, the base station may, by the SFI, indicate the second data transmission direction of the first time unit as UL, or DL or dynamic flexible.

It should be noted that the execution sequence of steps 201 and 202 is not limited in the present disclosure.

At step 203, in response to determining that the first data transmission direction is different from the second data transmission direction, a first behavior of the terminal in the first time unit is determined as including neglecting the indication of the SFI, and performing data transmission on the first subband based on the first data transmission direction.

In an embodiment of the present disclosure, if the first data transmission direction is different from the second data transmission direction, the terminal may, based on a protocol-defined rule, neglect the indication of the SFI and still perform data transmission based on configuration or indication of the base station in the first time unit.

At step 204, the first behavior is performed in the first time unit.

In one possible implementation, when the SFI indicates the second data transmission direction as downlink and the first data transmission direction configured or indicated for the first subband by the base station is uplink, the terminal may neglect the indication of the SFI and transmit data on the first subband (i.e. uplink subband).

In another possible implementation, the SFI indicates the second data transmission direction as uplink and the first data transmission direction configured or indicated for the first subband by the base station is downlink, the terminal may neglect the indication of the SFI and receive data on the first subband (i.e. downlink subband).

In another possible implementation, when the SFI indicates the second data transmission direction as flexible and the first data transmission direction configured or indicated for the first subband by the base station is uplink, the terminal may neglect the indication of the SFI and transmit data on the first subband (i.e. uplink subband).

In another possible implementation, when the SFI indicates the second data transmission direction as flexible and the first data transmission direction configured or indicated for the first subband by the base station is downlink, the terminal may neglect the indication of the SFI and receive data on the first subband (i.e. downlink subband).

In the above embodiments, when the first data transmission direction of the subband on the time unit with flexible data transmission direction is in conflict with the second data transmission direction indicated by the base station through the SFI, the terminal may neglect the indication of the SFI based on protocol agreement on the time unit, and based on the first data transmission direction, perform data transmission on the first subband. In this way, the problem of the conflict of the first data transmission direction of the subband on the time unit with flexible data transmission direction and the second data transmission direction indicated by the base station through the SFI can be solved effectively, improving the duplex communication feasibility.

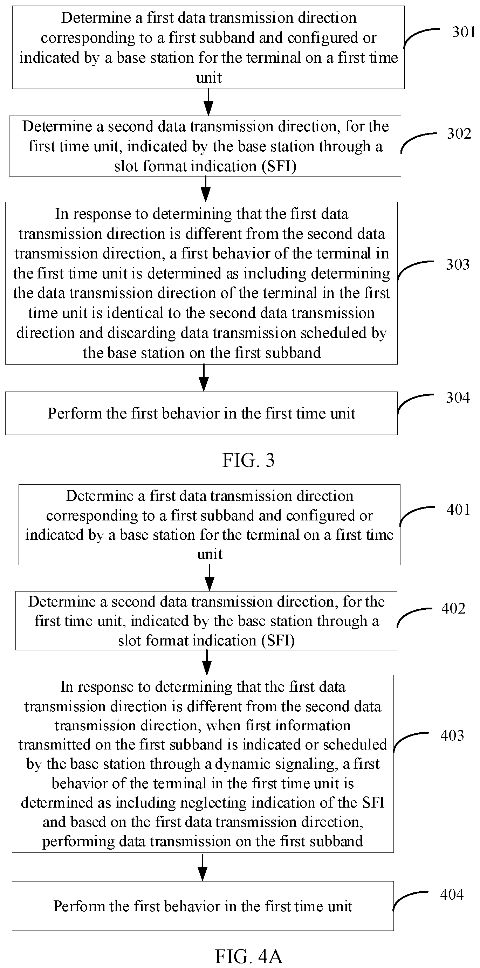

In some optional embodiments, as shown in FIG. 3, it is a flowchart illustrating a method for data transmission according to an embodiment. The method may be performed by a terminal and the terminal may have half duplex or full duplex capability. The method includes the following steps 301 to 304.

At step 301, a first data transmission direction corresponding to a first subband and configured or indicated by a base station for the terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

In an embodiment of the present disclosure, the first data transmission direction corresponding to the first subband may be uplink or downlink, that is, the base station can configure or indicate an uplink subband or a downlink subband for the terminal in the first time unit.

At step 302, a second data transmission direction, for the first time unit, indicated by the base station through a slot format indication (SFI) is determined.

In an embodiment of the present disclosure, the base station may, by the SFI, indicate the second data transmission direction of the first time unit as UL, or DL or dynamic flexible.

It should be noted that the execution sequence of steps 301 and 302 is not limited in the present disclosure.

At step 303, in response to determining that the first data transmission direction is different from the second data transmission direction, a first behavior of the terminal in the first time unit is determined as including determining the data transmission direction of the terminal in the first time unit is identical to the second data transmission direction and discarding data transmission scheduled by the base station on the first subband.

In an embodiment of the present disclosure, if the first data transmission direction is different from the second data transmission direction, the terminal may, based on protocol-defined rule, determine the transmission direction of the terminal in the first time unit based on the second data transmission direction indicated by the SFI, and discard (or neglect) the data transmission configured or indicated by the base station in the first time unit.

At step 304, the first behavior is performed in the first time unit.

In one possible implementation, when the SFI indicates the second data transmission direction as downlink and the first data transmission direction configured or indicated for the first subband by the base station is uplink, it is determined that the data transmission direction of the terminal in the first time unit is downlink and an uplink channel transmitted on the first subband is discarded.

In another possible implementation, when the second data transmission direction indicated by the SFI is uplink and the first data transmission direction configured or indicated for the first subband by the base station is downlink, it is determined that the data transmission direction of the terminal in the first time unit is uplink and a downlink channel transmitted by the base station on the first subband is discarded (or neglected).

In another possible implementation, when the second data transmission direction indicated by the SFI is flexible and the first data transmission direction configured or indicated for the first subband by the base station is uplink, the terminal does not transmit or receive data in the first time unit.

In another possible implementation, when the second data transmission direction indicated by the SFI is flexible and the first data transmission direction configured or indicated for the first subband by the base station is downlink, the terminal does not transmit or receive data in the first time unit.

In the above embodiments, when the first data transmission direction of the subband on the time unit with flexible data transmission direction is in conflict with the second data transmission direction indicated by the base station through the SFI, the terminal may, based on protocol agreement, determine on the time unit that the data transmission direction of the terminal in the first time unit is identical to the second data transmission direction and the data transmission scheduled by the base station on the first subband is discarded. In this way, the problem of the conflict of the first data transmission direction of the subband on the time unit with flexible data transmission direction and the second data transmission direction indicated by the base station through the SFI can be solved effectively, improving the duplex communication feasibility.

In this embodiment, the terminal may, based on the manner provided in the above embodiments, directly determine the first behavior of the terminal in the first time unit and perform the first behavior. Optionally, the terminal may also, based on the determination manner of first information transmitted on the first subband, determine the first behavior of the terminal in the first time unit and perform the first behavior. The first information may be channel or signal.

Specifically, the first information can be determined in the following manners: semi-static configuration; dynamic indication.

If the first information is indicated or scheduled by the base station through a dynamic signaling, the first behavior may include: neglecting the indication of the SFI in the first time unit, and based on the first data transmission direction, performing data transmission on the first subband. The dynamic signaling may be any one of: Downlink Control Information (DCI); Media Access Control Control Element (MAC CE).

If the first information is semi-statically configured by the base station through a Radio Resource Control (RRC) signaling, the first behavior may include: performing data transmission based on the second data transmission direction indicated by the SFI, and discarding the data transmission scheduled by the base station on the first subband.

The reverse is also true. If the first information is semi-statically configured by the base station through an RRC signaling, the first behavior may include: neglecting the indication of the SFI in the first time unit, and based on the first data transmission direction, performing data transmission on the first subband. If the first information is indicated or scheduled by the base station through a dynamic signaling, the first behavior may include: performing data transmission based on the second data transmission direction indicated by the SFI and discarding the data transmission scheduled by the base station on the first subband.

As shown in FIG. 4A, it is a flowchart illustrating a method for data transmission according to an embodiment. The method may be performed by a terminal and the terminal may have half duplex or full duplex capability. The method may include the following steps 401 to 404.

At step 401, a first data transmission direction corresponding to a first subband and configured or indicated by a base station for the terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

In an embodiment of the present disclosure, the first data transmission direction corresponding to the first subband may be uplink or downlink, that is, the base station can configure or indicate an uplink subband or a downlink subband for the terminal in the first time unit.

At step 402, a second data transmission direction, for the first time unit, indicated by the base station through a slot format indication (SFI) is determined.

In an embodiment of the present disclosure, the base station may, by the SFI, indicate the second data transmission direction of the first time unit as UL, or DL or dynamic flexible.

It should be noted that the execution sequence of steps 401 and 402 is not limited in the present disclosure.

At step 403, in response to determining that the first data transmission direction is different from the second data transmission direction, when first information transmitted on the first subband is indicated or scheduled by the base station through a dynamic signaling, a first behavior of the terminal in the first time unit is determined as including neglecting indication of the SFI and based on the first data transmission direction, performing data transmission on the first subband.

In an embodiment of the present disclosure, the first information may be channel or signal.

In one possible implementation, the dynamic signaling may be any one of: DCI; MAC CE.

In an embodiment of the present disclosure, if the first data transmission direction is different from the second data transmission direction and the terminal determines the first information is indicated or scheduled by the base station through a dynamic signaling, the terminal determines the first behavior includes neglecting the indication of the SFI and still performing data transmission based on configuration or indication of the base station in the first time unit.

At step 404, the first behavior is performed in the first time unit.

In one possible implementation, when the second data transmission direction indicated by the SFI is downlink and the first data transmission direction configured or indicated for the first subband by the base station is uplink, the terminal may neglect the indication of the SFI and transmit data on the first subband (i.e. uplink subband).

In another possible implementation, when the second data transmission direction indicated by the SFI is uplink and the first data transmission direction configured or indicated for the first subband by the base station is downlink, the terminal may neglect the indication of the SFI and receive data on the first subband (i.e. downlink subband).

In another possible implementation, when the second data transmission direction indicated by the SFI is flexible and the first data transmission direction configured or indicated for the first subband by the base station is uplink, the terminal may neglect the indication of the SFI and transmit data on the first subband (i.e. uplink subband).

In another possible implementation, when the second data transmission direction indicated by the SFI is flexible and the first data transmission direction configured or indicated for the first subband by the base station is downlink, the terminal may neglect the indication of the SFI and receive data on the first subband (i.e. downlink subband).

In the above embodiments, when the first data transmission direction of the subband on the time unit with flexible data transmission direction is in conflict with the second data transmission direction indicated by the base station through the SFI, the terminal may, based on the determination manner of the first information, determine the first behavior of the terminal and perform the first behavior. In this way, the problem of the conflict of the first data transmission direction of the subband on the time unit with flexible data transmission direction and the second data transmission direction indicated by the base station through the SFI can be solved effectively, improving the duplex communication feasibility.

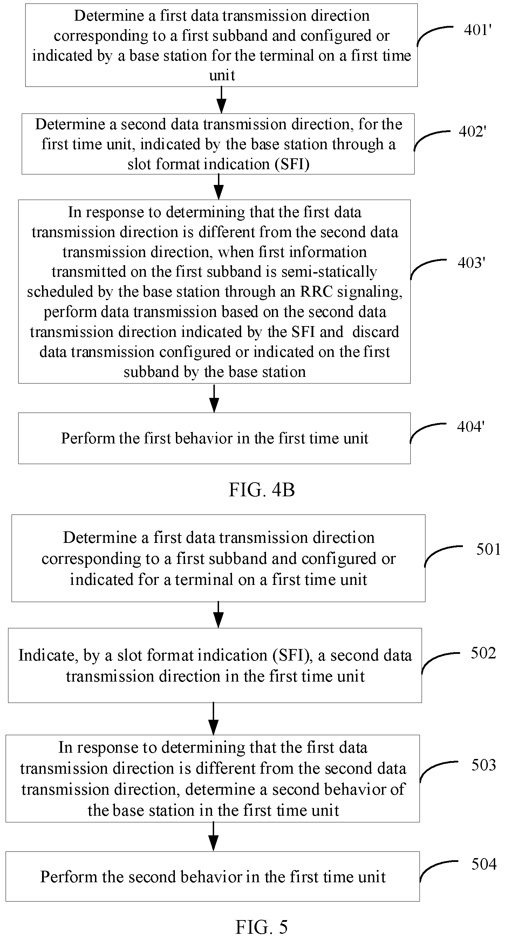

As shown in FIG. 4B, it is a flowchart illustrating a method for data transmission according to an embodiment. The method may be performed by a terminal and the terminal may have half duplex or full duplex capability. The method may include the following steps 401' to 404'.

At step 401', a first data transmission direction corresponding to a first subband and configured or indicated by a base station for the terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

In an embodiment of the present disclosure, the first data transmission direction corresponding to the first subband may be uplink or downlink, that is, the base station can configure or indicate an uplink subband or a downlink subband for the terminal in the first time unit.

At step 402', a second data transmission direction, for the first time unit, indicated by the base station through a slot format indication (SFI) is determined.

In an embodiment of the present disclosure, the base station may, by the SFI, indicate the second data transmission direction of the first time unit as UL, or DL or dynamic flexible.

It should be noted that the execution sequence of steps 401' and 402' is not limited in the present disclosure.

At step 403', in response to determining that the first data transmission direction is different from the second data transmission direction, when first information transmitted on the first subband is semi-statically scheduled by the base station through an RRC signaling, data transmission is performed based on the second data transmission direction indicated by the SFI and data transmission configured or indicated on the first subband by the base station is discarded.

In an embodiment of the present disclosure, the first information is channel or signal.

In an embodiment of the present disclosure, if the first data transmission direction is different from the second data transmission direction and the terminal determines the first information is semi-statically configured by the base station through an RRC signaling, the terminal determines a first behavior includes: performing data transmission based on the second data transmission direction indicated by the SFI, and discarding the data transmission scheduled by the base station on the first subband.

In one possible implementation, the first information may be Semi-Persistent Scheduling Physical Downlink Shared Channel (SPS PDSCH), Configured Grant Physical Uplink Shared Channel (CG PUSCH), periodic Sounding Reference Signal (periodic SRS), periodic Channel State Information Reference Signal (periodic CSI RS) and the like.

At step 404', the first behavior is performed in the first time unit.

In one possible implementation, when the second data transmission direction indicated by the SFI is downlink and the first data transmission direction configured or indicated for the first subband by the base station is uplink, it is determined that the data transmission direction of the terminal in the first time unit is downlink and an uplink channel transmitted on the first subband is discarded.

In another possible implementation, when the second data transmission direction indicated by the SFI is uplink and the first data transmission direction configured or indicated for the first subband by the base station is downlink, it is determined that the data transmission direction of the terminal in the first time unit is uplink and a downlink channel transmitted by the base station on the first subband is discarded (or neglected).

In another possible implementation, when the second data transmission direction indicated by the SFI is flexible and the first data transmission direction configured or indicated for the first subband by the base station is uplink, the terminal does not transmit or receive data in the first time unit.

In another possible implementation, when the second data transmission direction indicated by the SFI is flexible and the first data transmission direction configured or indicated for the first subband by the base station is downlink, the terminal does not transmit or receive data in the first time unit.

In the above embodiments, when the first data transmission direction of the subband on the time unit with flexible data transmission direction is in conflict with the second data transmission direction indicated by the base station through the SFI, the terminal may, based on the determination manner of the first information, determine the first behavior of the terminal and perform the first behavior. In this way, the problem of the conflict of the first data transmission direction of the subband on the time unit with flexible data transmission direction and the second data transmission direction indicated by the base station through the SFI can be solved effectively, improving the duplex communication feasibility.

The method for data transmission of the present disclosure will be further described below from base station side.

An embodiment of the present disclosure provides a method for data transmission. As shown in FIG. 5, it is a flowchart illustrating a method for data transmission according to an embodiment of the present disclosure. The method may be performed by a base station and the base station may have full duplex capability. The method may include the following steps 501 to 504.

At step 501, a first data transmission direction corresponding to a first subband and configured or indicated for a terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

At step 502, by a Slot Format Indication (SFI), a second data transmission direction in the first time unit is indicated.

In an embodiment of the present disclosure, the base station may, by the SFI, indicate the second data transmission direction of the first time unit as UL, or DL or dynamic flexible.

It should be noted that the execution sequence of the steps 501 and 502 is not limited in the present disclosure, that is, the step 501 may be executed before the step 502 or the step 502 is executed before the step 501.

At step 503, in response to determining that the first data transmission direction is different from the second data transmission direction, a second behavior of the base station in the first time unit is determined.

In an embodiment of the present disclosure, if the first data transmission direction is different from the second data transmission direction, the base station may, based on a protocol-defined rule, determine the second behavior of the base station in the first time unit.

At step 504, the second behavior is performed in the first time unit.

In the above embodiments, the problem of the conflict of the first data transmission direction of the subband on the time unit with flexible data transmission direction and the second data transmission direction indicated by the base station through the SFI can be solved effectively, improving the duplex communication feasibility.

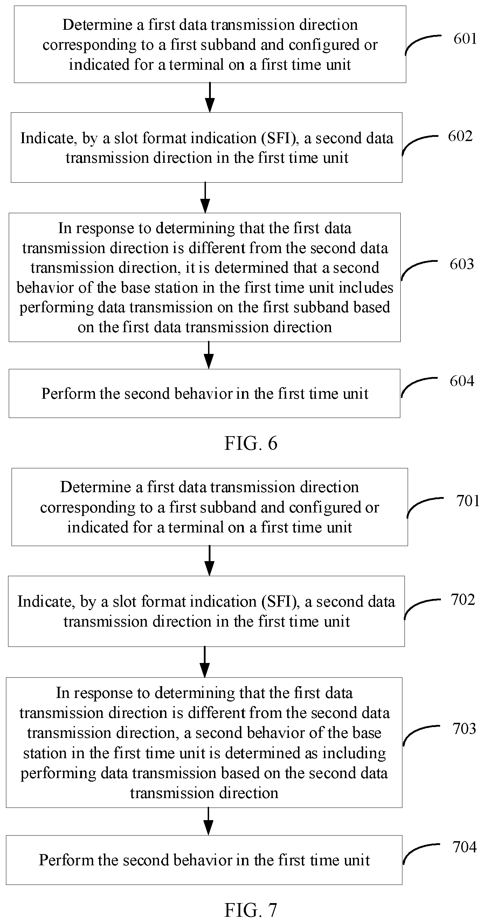

In some optional embodiments, as shown in FIG. 6, it is a flowchart illustrating a method for data transmission according to an embodiment. The method may be performed by a base station and the base station may have full duplex capability. The method may include the following steps 601 to 604.

At step 601, a first data transmission direction corresponding to a first subband and configured or indicated for a terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

At step 602, by a Slot Format Indication (SFI), a second data transmission direction in the first time unit is indicated.

In an embodiment of the present disclosure, the base station may, by the SFI, indicate the second data transmission direction of the first time unit as UL, or DL or dynamic flexible.

It should be noted that the execution sequence of the steps 601 and 602 is not limited in the present disclosure.

At step 603, in response to determining that the first data transmission direction is different from the second data transmission direction, it is determined that a second behavior of the base station in the first time unit includes performing data transmission on the first subband based on the first data transmission direction.

In an embodiment of the present disclosure, if the first data transmission direction is different from the second data transmission direction, the base station may, based on a protocol-defined rule, determine the second behavior of the base station in the first time unit includes performing data transmission on the first subband based on the first data transmission direction.

At step 604, the second behavior is performed in the first time unit.

In one possible implementation, when the second data transmission direction indicated by the SFI is downlink and the first data transmission direction configured or indicated for the first subband by the base station is uplink, the base station receives data on the first subband.

In another possible implementation, when the second data transmission direction indicated by the SFI is uplink and the first data transmission direction configured or indicated for the first subband by the base station is downlink, the base station transmits data on the first subband.

In another possible implementation, when the second data transmission direction indicated by the SFI is flexible and the first data transmission direction configured or indicated for the first subband by the base station is uplink, the base station receives data on the first subband.

In another possible implementation, when the second data transmission direction indicated by the SFI is flexible and the first data transmission direction configured or indicated for the first subband by the base station is downlink, the base station transmits data on the first subband.

In the above embodiments, when the first data transmission direction of the subband on the time unit with flexible data transmission direction is in conflict with the second data transmission direction indicated by the base station through the SFI, the base station may, based on protocol agreement on the time unit, perform data transmission on the first subband based on the first data transmission direction. In this way, the problem of the conflict of the first data transmission direction of the subband on the time unit with flexible data transmission direction and the second data transmission direction indicated by the base station through the SFI can be solved effectively, improving the duplex communication feasibility.

In some optional embodiments, as shown in FIG. 7, it is a flowchart illustrating a method for data transmission according to an embodiment. The method may be performed by a base station and the base station may have full duplex capability. The method may include the following steps 701 to 704.

At step 701, a first data transmission direction corresponding to a first subband and configured or indicated for a terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

At step 702, by a Slot Format Indication (SFI), a second data transmission direction in the first time unit is indicated.

In an embodiment of the present disclosure, the base station may, by the SFI, indicate the second data transmission direction of the first time unit as UL, or DL or dynamic flexible.

It should be noted that the execution sequence of the steps 701 and 702 is not limited in the present disclosure.

At step 703, in response to determining that the first data transmission direction is different from the second data transmission direction, a second behavior of the base station in the first time unit is determined as including performing data transmission based on the second data transmission direction.

In an embodiment of the present disclosure, if the first data transmission direction is different from the second data transmission direction, the base station may, based on a protocol-defined rule, determine the second behavior of the base station in the first time unit includes performing data transmission based on the first data transmission direction.

At step 704, the second behavior is performed in the first time unit.

In one possible implementation, when the second data transmission direction indicated by the SFI is downlink and the first data transmission direction configured or indicated for the first subband by the base station is uplink, the base station transmits data in the first time unit.

In another possible implementation, when the second data transmission direction indicated by the SFI is uplink and the first data transmission direction configured or indicated for the first subband by the base station is downlink, the base station receives data in the first time unit.

In another possible implementation, when the second data transmission direction indicated by the SFI is flexible and the first data transmission direction configured or indicated for the first subband by the base station is uplink, the base station does not expect to transmit or receive specified data in the first time unit. The specified data is data the base station indicates transmitting before transmitting the SFI.

In another possible implementation, when the second data transmission direction indicated by the SFI is flexible and the first data transmission direction configured or indicated for the first subband by the base station is downlink, the base station does not expect to transmit or receive the specified data in the first time unit. The specified data is data the base station indicates transmitting before transmitting the SFI.

In the above embodiments, when the first data transmission direction of the subband on the time unit with flexible data transmission direction is in conflict with the second data transmission direction indicated by the base station through the SFI, the base station may, based on protocol agreement on the time unit, perform data transmission based on the second data transmission direction. In this way, the problem of the conflict of the first data transmission direction of the subband on the time unit with flexible data transmission direction and the second data transmission direction indicated by the base station through the SFI can be solved effectively, improving the duplex communication feasibility.

In this embodiment, the base station may, based on the manner of the above embodiments, i.e. on the protocol agreement, directly determine the second behavior of the base station in the first time unit and perform the second behavior. Optionally, the base station may also, based on the determination manner of the first information, determine the second behavior of the base station in the first time unit and perform the second behavior. The first information may be channel or signal transmitted on the first subband.

Specifically, the first information can be determined in the following two manners: semi-static configuration; and dynamic indication.

If the first information is indicated or scheduled by the base station through a dynamic signaling, the second behavior may include: performing data transmission on the first subband based on the first data transmission direction.

If the first information is semi-statically configured by the base station through an RRC signaling, the second behavior may include: performing data transmission based on the second data transmission direction.

The reverse is also true. The specific implementation is similar to the implementation in which the terminal side determines the first behavior of the terminal based on the determination manner of the first information and will not be repeated herein.

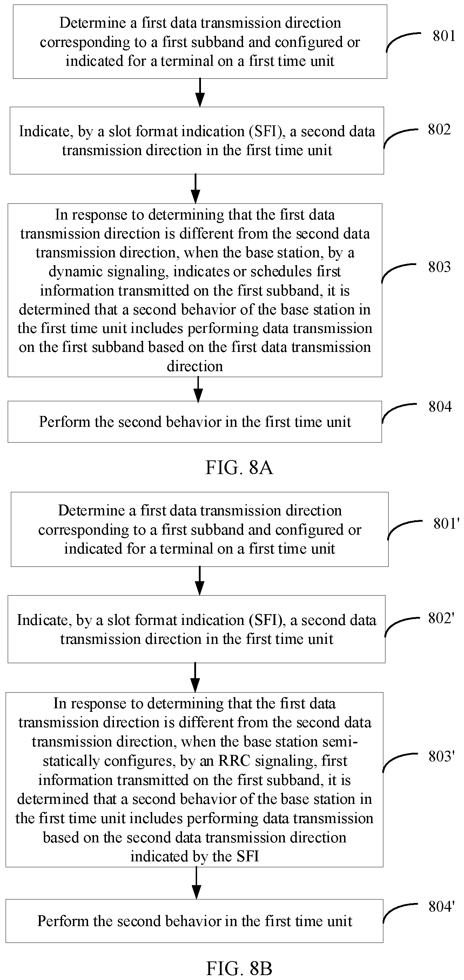

As shown in FIG. 8A, it is a flowchart illustrating a method for data transmission according to an embodiment. The method may be performed by a base station and the base station may have full duplex capability. The method includes the following steps 801 to 804.

At step 801, a first data transmission direction corresponding to a first subband and configured or indicated for a terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

At step 802, by a Slot Format Indication (SFI), a second data transmission direction in the first time unit is indicated.

In an embodiment of the present disclosure, the base station may, by the SFI, indicate the second data transmission direction of the first time unit as UL, or DL or dynamic flexible.

It should be noted that the execution sequence of the steps 801 and 802 is not limited in the present disclosure.

At step 803, in response to determining that the first data transmission direction is different from the second data transmission direction, when the base station, by a dynamic signaling, indicates or schedules first information transmitted on the first subband, it is determined that a second behavior of the base station in the first time unit includes performing data transmission on the first subband based on the first data transmission direction.

In an embodiment of the present disclosure, the first information is channel or signal.

In one possible implementation, the dynamic signaling may be any one of: DCI; and MAC CE.

If the first data transmission direction is different from the second data transmission direction, and the base station, by a dynamic signaling, indicates or schedules the first information transmitted on the first subband, it is determined that the second behavior of the base station in the first time unit includes: performing data transmission on the first subband based on the first data transmission direction.

At step 804, the second behavior is performed in the first time unit.

In one possible implementation, when the second data transmission direction indicated by the SFI is downlink and the first data transmission direction configured or indicated for the first subband by the base station is uplink, the base station receives data on the first subband.

In another possible implementation, when the second data transmission direction indicated by the SFI is uplink and the first data transmission direction configured or indicated for the first subband by the base station is downlink, the base station transmits data on the first subband.

In another possible implementation, when the second data transmission direction indicated by the SFI is flexible and the first data transmission direction configured or indicated for the first subband by the base station is uplink, the base station receives data on the first subband.

In another possible implementation, when the second data transmission direction indicated by the SFI is flexible and the first data transmission direction configured or indicated for the first subband by the base station is downlink, the base station transmits data on the first subband.

In the above embodiments, when the first data transmission direction of the subband on the time unit with flexible data transmission direction is in conflict with the second data transmission direction indicated by the base station through the SFI, the base station may, based on the determination manner of the first information, determine the second behavior of the base station and perform the second behavior. In this way, the problem of the conflict of the first data transmission direction of the subband on the time unit with flexible data transmission direction and the second data transmission direction indicated by the base station through the SFI can be solved effectively, improving the duplex communication feasibility.

As shown in FIG. 8B, it is a flowchart illustrating a method for data transmission according to an embodiment of the present disclosure. The method may be performed by a base station and the base station may have full duplex capability. The method may include the following steps 801' to 804'.

At step 801', a first data transmission direction corresponding to a first subband and configured or indicated for a terminal on a first time unit is determined.

In an embodiment of the present disclosure, the first time unit is a time unit, with data transmission direction being flexible, preconfigured by the base station. There may be one or more first time units, which is not limited herein.

In one possible implementation, the first time unit is a semi-static flexible symbol configured by the base station through a Radio Resource Control (RRC) signaling.

At step 802', by a Slot Format Indication (SFI), a second data transmission direction in the first time unit is indicated.

In an embodiment of the present disclosure, the base station may, by the SFI, indicate the second data transmission direction of the first time unit as UL, or DL or dynamic flexible.

It should be noted that the execution sequence of the steps 801' and 802' is not limited in the present disclosure.

At step 803', in response to determining that the first data transmission direction is different from the second data transmission direction, when the base station semi-statically configures, by an RRC signaling, first information transmitted on the first subband, it is determined that a second behavior of the base station in the first time unit includes performing data transmission based on the second data transmission direction indicated by the SFI.

In an embodiment of the present disclosure, the first information is channel or signal.

In one possible implementation, the first information may be SPS PDSCH, CG PUSCH, periodic SRS, periodic CSI RS and the like.

In an embodiment of the present disclosure, if the first data transmission direction is different from the second data transmission direction and the base station determines the first information is semi-statically configured by the base station through an RRC signaling, the base station determines that a second behavior includes: performing data transmission based on the second data transmission direction indicated by the SFI.

At step 804', the second behavior is performed in the first time unit.

In one possible implementation, when the second data transmission direction indicated by the SFI is downlink and the first data transmission direction configured or indicated for the first subband by the base station is uplink, the base station transmits data in the first time unit.

In another possible implementation, when the second data transmission direction indicated by the SFI is uplink and the first data transmission direction configured or indicated for the first subband by the base station is downlink, the base station receives data in the first time unit.

In another possible implementation, when the second data transmission direction indicated by the SFI is flexible and the first data transmission direction configured or indicated for the first subband by the base station is uplink, the base station does not expect to transmit or receive specified data in the first time unit. The specified data is data the base station indicates transmitting before transmitting the SFI.

In another possible implementation, when the second data transmission direction indicated by the SFI is flexible and the first data transmission direction configured or indicated for the first subband by the base station is downlink, the base station does not expect to transmit or receive the specified data in the first time unit. The specified data is data the base station indicates transmitting before transmitting the SFI.

In the above embodiments, when the first data transmission direction of the subband on the time unit with flexible data transmission direction is in conflict with the second data transmission direction indicated by the base station through the SFI, the base station may, based on the determination manner of the first information, determine the second behavior of the base station and perform the second behavior. In this way, the problem of the conflict of the first data transmission direction of the subband on the time unit with flexible data transmission direction and the second data transmission direction indicated by the base station through the SFI can be solved effectively, improving the duplex communication feasibility.

The method for data transmission of the present disclosure may be further exemplified below.

Embodiment 1: it is supposed that the terminal is a terminal of Rel-18 or later version and has half duplex or full duplex capability, which is not limited herein. It is supposed that full duplex operation is performed by the base station on the semi-static flexible symbol of the TDD frequency band, that is, downlink data and uplink data are scheduled at the same time. The first time unit is semi-static flexible symbol and can be determined by the following information transmitted by the base station:
tdd-UL-DL-ConfigurationCommon;
tdd-UL-DL-ConfigurationCommon and tdd-UL-DL-ConfigurationDedicated.

The base station, by using the following two manners, indicates the transmission direction of the terminal on the semi-static flexible symbol, which is not limited in the embodiments of the present disclosure.

The base station configures the first data transmission direction of the first subband for the terminal, i.e. configures an UL subband or a DL subband. Within the UL subband, the terminal can only perform uplink transmitting; within the DL subband, the terminal can only perform uplink reception. The base station performs scheduling of data channel or indication of reference signal within the UL subband or DL subband.

The base station, by scheduling information or high-level configuration, indicates the terminal to perform transmitting or reception on the semi-static symbol. The base station does not need to explicitly configure the UL subband or DL subband for the terminal.

Furthermore, the base station indicates the transmission direction of the semi-static flexible symbol by an SFI, that is, based on service circumstance or interference circumstance, indicates the semi-static flexible symbol as DL, UL or dynamic flexible.

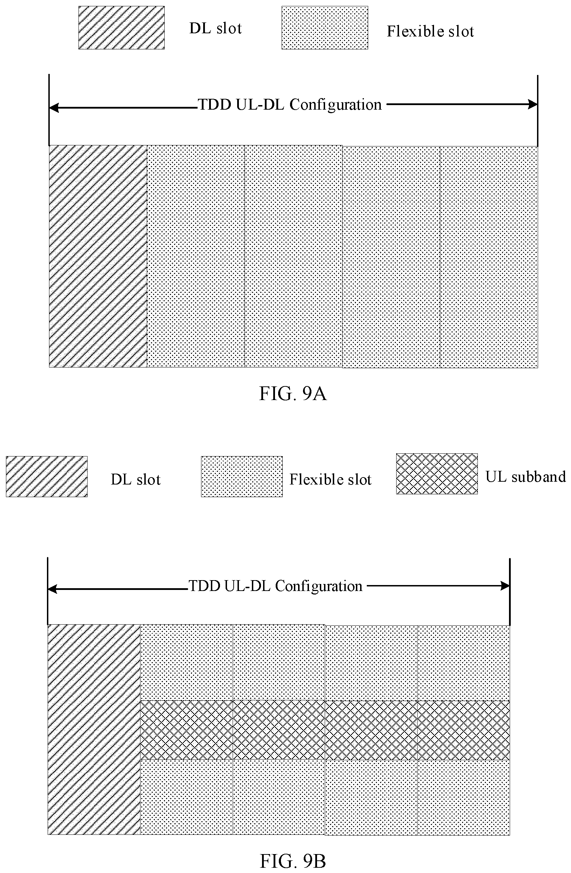

In an embodiment of the present disclosure, it is supposed that the slot structure configured by the base station through TDD UL-DL configuration is DFFFF, that is, within the TDD configuration period, the first slot is DL slot, and the remaining four slots are flexible slots, as shown in FIG. 9A. Of course, the method provided by the embodiments of the present disclosure may also be directly applied to other TDD UL DL slot structures, which is not limited herein.

In an embodiment of the present disclosure, it is supposed that the base station schedules uplink transmission on the UL subband on the semi-flexible symbol, that is, an uplink subband is configured on the last four slots shown in FIG. 9A, as shown in FIG. 9B. It should be noted that the uplink transmission may be uplink data or uplink reference signal, which is not limited herein.

If the base station, by the SFI, indicates the semi-static flexible symbol as DL symbol or flexible symbol, the terminal neglects the indication of the SFI and still performs uplink transmission within the UL subband as scheduled by the base station. At this time, the base station cannot schedule downlink transmission for the terminal within the UL subband.

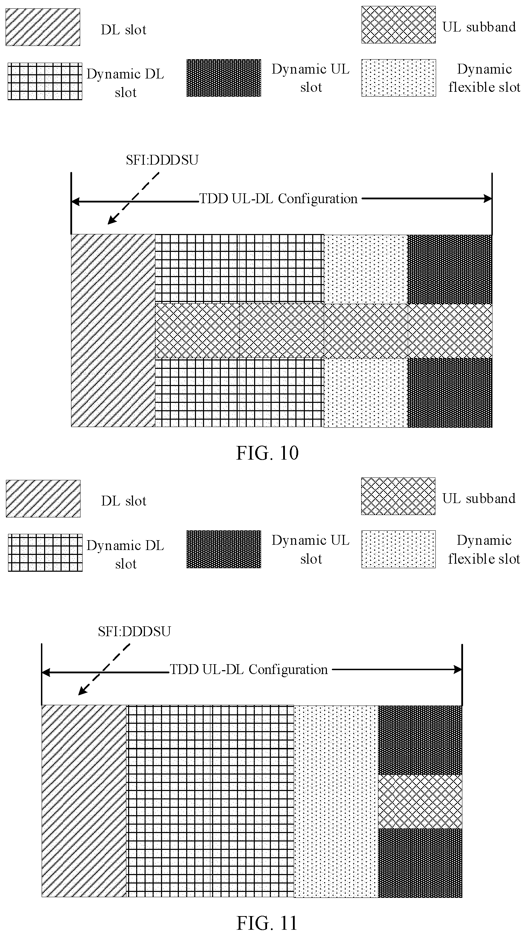

As shown in FIG. 10, the second data transmission direction indicated by the SFI transmitted by the base station is: DDDSU. The base station, by the SFI, indicates the second data transmission directions corresponding to the last four slots as downlink, downlink, flexible and uplink respectively at this time, and the uplink subband is previously configured by the base station on the last four flexible slots (shown in FIG. 9B). It can be seen that except for the last flexible slot, the first data transmission directions on the other three flexible slots are all different from the second data transmission direction. At this time, the terminal may neglect the indication of the SFI and based on the first data transmission direction, transmit data on the uplink subband. As shown in FIG. 10, the terminal still transmits data on the uplink subbands of the other three flexible slots, and the base station receives data on the corresponding uplink subbands.

It should be noted that the DL symbol or flexible symbol indicated by the SFI is partially or fully overlapped with the uplink transmission of the terminal within the UL subband, which is not limited herein.

Embodiment 2: as described in the embodiment 1, the transmission direction indicated by the SFI transmitted by the base station is in conflict with the DL subband on the semi-static flexible symbol.

If the base station, by the SFI, indicates the semi-static flexible symbol as UL symbol or flexible symbol, the terminal neglects the indication of the SFI and still receives data within the DL subband as scheduled by the base station, and the base station transmits data within the DL subband. At this time, the base station cannot schedule uplink transmission for the terminal within the DL subband.

Embodiment 3: as in the embodiment 1, it is supposed that the terminal is a terminal of Rel-18 or later version and has half duplex or full duplex capability, which is not limited herein. It is supposed that full duplex operation is performed by the base station on the semi-static flexible symbol of the TDD frequency band, that is, downlink data and uplink data are scheduled at the same time. The first time unit is semi-static flexible symbol and can be determined by the following information transmitted by the base station:
tdd-UL-DL-ConfigurationCommon;
tdd-UL-DL-ConfigurationCommon and tdd-UL-DL-ConfigurationDedicated.

The base station, by using the following two manners, indicates the transmission direction of the terminal on the semi-static flexible symbol, which is not limited in the embodiments of the present disclosure.

The base station configures the first data transmission direction of the first subband for the terminal, that is, configures UL subband or DL subband. Within the UL subband, the terminal can only perform uplink transmitting; within the DL subband, the terminal can only perform uplink reception. The base station performs scheduling of data channel or indication of reference signal within the UL subband or DL subband.

The base station, by scheduling information or high-level configuration, indicates the terminal to perform transmitting or reception on the semi-static symbol. The base station does not need to explicitly configure the UL subband or DL subband for the terminal.

Furthermore, the base station indicates the transmission direction of the semi-static flexible symbol by an SFI, that is, based on service circumstance or interference circumstance, indicates the semi-static flexible symbol as DL, UL or dynamic flexible.

In an embodiment of the present disclosure, it is supposed that the slot structure configured by the base station through TDD UL-DL configuration is DFFFF, that is, within the TDD configuration period, the first slot is DL slot, and the remaining four slots are flexible slots, as shown in FIG. 9A. Of course, the method provided by the embodiments of the present disclosure may also be directly applied to other TDD UL DL slot structures, which is not limited herein.

In an embodiment of the present disclosure, it is supposed that the base station schedules uplink transmission on the UL subband on the semi-flexible symbol, that is, an uplink subband is configured on the last four slots shown in FIG. 9A, as shown in FIG. 9B. It should be noted that the uplink transmission may be uplink data or uplink reference signal, which is not limited herein.

If the base station, by the SFI, indicates the semi-static flexible symbol as DL symbol or flexible symbol, the terminal neglects the transmission which is within the UL subband and configured or indicated by the base station, that is, the terminal determines the data transmission direction based on the indication of the SFI transmitted by the base station. At this time, the base station cannot schedule downlink transmission within the resource occupied by the UL subband.

With reference to FIG. 11, the second data transmission direction indicated by the SFI transmitted by the base station is DDDSU. The base station, by the SFI, indicates the second data transmission directions corresponding to the last four slots as downlink, downlink, flexible and uplink respectively, and the uplink subband is previously configured by the base station on the last four flexible slots (shown in FIG. 9B). It can be seen that except for the last flexible slot, the first data transmission directions on the other three flexible slots are all different from the second data transmission direction. At this time, the terminal may perform data transmission based on the second data transmission direction indicated by the SFI and discard the data transmission configured by the base station on the first subband. As shown in FIG. 11, except for the last flexible slot, the data transmission directions of the terminal on the other three slots are downlink, downlink and flexible respectively. Of course, the data transmission direction on the last symbol is uplink and the uplink subband of the symbol can be retained.

Embodiment 4: as in the embodiment 3, the transmission direction indicated by the SFI transmitted by the base station is in conflict with the DL subband on the semi-static flexible symbol. It is supposed that the base station, by the SFI, indicates the semi-static flexible symbol as UL symbol or flexible symbol, the terminal may neglect the downlink reception which is within the DL subband and scheduled by the base station. At this time, the base station can schedule uplink transmission for the terminal within the resource occupied by the DL subband.

Embodiment 5: it is supposed that the terminal is a terminal of Rel-18 or later version and has half duplex or full duplex capability, which is not limited herein. It is supposed that full duplex operation is performed by the base station on the semi-static flexible symbol of the TDD frequency band, that is, downlink data and uplink data are scheduled at the same time. The first time unit is semi-static flexible symbol and can be determined by the following information transmitted by the base station:
tdd-UL-DL-ConfigurationCommon;
tdd-UL-DL-ConfigurationCommon and tdd-UL-DL-ConfigurationDedicated.

The base station, by using the following two manners, indicates the transmission direction of the terminal on the semi-static flexible symbol, which is not limited in the embodiments of the present disclosure.

The base station configures the first data transmission direction of the first subband for the terminal, that is, configures UL subband or DL subband. Within the UL subband, the terminal can only perform uplink transmitting; within the DL subband, the terminal can only perform uplink reception. The base station performs scheduling of data channel or indication of reference signal within the UL subband or DL subband.

The base station, by scheduling information or high-level configuration, indicates the terminal to perform transmitting or reception on the semi-static symbol. The base station does not need to explicitly configure the UL subband or DL subband for the terminal.

Furthermore, the base station indicates the transmission direction of the semi-static flexible symbol by the SFI, that is, based on service circumstance or interference circumstance, indicates the semi-static flexible symbol as DL, UL or dynamic flexible.

In an embodiment of the present disclosure, it is supposed that the slot structure configured by the base station through TDD UL-DL configuration is DFFFF, that is, within the TDD configuration period, the first slot is DL slot, and the remaining four slots are flexible slots, as shown in FIG. 9A. Of course, the method provided by the embodiments of the present disclosure may also be directly applied to other TDD UL DL slot structures, which is not limited herein.

In an embodiment of the present disclosure, it is supposed that the base station schedules uplink transmission on the UL subband on the semi-flexible symbol, that is, an uplink subband is configured on the last four slots shown in FIG. 9A, as shown in FIG. 9B. It should be noted that the uplink transmission may be uplink data or uplink reference signal, which is not limited herein.

It is supposed that the transmission direction the base station indicates for the semi-static flexible symbol by the SFI is different from the subband transmission direction of the terminal, the terminal determines a relevant behavior within the subband by the following manners.

If the channel or signal transmitted within the UL subband or DL subband on the semi-static flexible symbol, i.e. the first information, is semi-statically configured, the first information may be WieSPS PDSCH, CG PUSCH, periodic SRS, periodic CSI RS and the like. Thus the duplex terminal determines the transmission direction based on the direction indicated by the SFI. If the direction indicated by the SFI is different from the semi-static transmission direction, the terminal may neglect or discard the semi-static transmission. Correspondingly, the base station does not expect to receive the semi-static uplink transmission or transmit the semi-static downlink transmission.

If the channel or signal transmitted within the UL subband or DL subband on the semi-static flexible symbol is indicated by the base station through dynamic signaling, the duplex terminal may neglect the SFI and transmit the corresponding channel or signal based on the dynamic indication of the base station. The dynamic signaling is DCI or MAC CE.

Embodiment 6: as in the embodiments 1 to 5, a sequence relationship between the SFI and the signaling for determining the subband on the semi-static flexible symbol is not limited in the present disclosure.

Corresponding to the embodiments of application function realization methods, the present disclosure also provides embodiments of application function realization apparatuses.

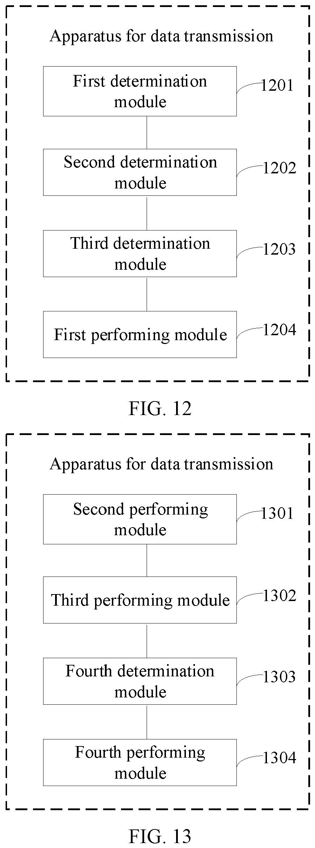

FIG. 12 is a block diagram illustrating an apparatus for data transmission according to an embodiment of the present disclosure. The apparatus for data transmission is applied to a terminal. As shown in FIG. 12, the apparatus for data transmission includes a first determination module 1201, a second determination module 1202, a third determination module 1203, and a first performing module 1204.

The first determination module 1201 is configured to determine a first data transmission direction corresponding to a first subband and configured or indicated by a base station for the terminal on a first time unit, where the first time unit is a time unit, with data transmission direction being flexible, preconfigured by the base station.

The second determination module 1202 is configured to determine a second data transmission direction, for the first time unit, indicated by the base station through a slot format indication (SFI).

The third determination module 1203 is configured to, in response to determining that the first data transmission direction is different from the second data transmission direction, determine a first behavior of the terminal in the first time unit.

The first performing module 1204 is configured to perform the first behavior in the first time unit.

FIG. 13 is a block diagram illustrating an apparatus for data transmission according to another embodiment of the present disclosure. The apparatus for data transmission is applied to a base station. As shown in FIG. 13, the apparatus for data transmission includes a second performing module 1301, a third performing module 1302, a fourth determination module 1303, and a fourth performing module 1304.

The second performing module 1301 is configured to determine a first data transmission direction corresponding to a first subband and configured or indicated for a terminal on a first time unit, where the first time unit is a time unit, with data transmission direction being flexible, preconfigured by the base station;

The third performing module 1302 is configured to indicate, by a slot format indication (SFI), a second data transmission direction in the first time unit;

The fourth determination module 1303 is configured to, in response to determining that the first data transmission direction is different from the second data transmission direction, determine a second behavior of the base station in the first time unit; and

The fourth performing module 1304 is configured to perform the second behavior in the first time unit.

Since embodiments of the device substantially corresponds to embodiments of the method, relevant parts may be referred to the description of the embodiments of the method. The apparatus examples described above are merely illustrative, where the units described as separate components may or may not be physically separated, and the components displayed as units may or may not be physical units, i.e., may be located in one place or may be distributed to multiple network units. Some or all of these modules can be selected according to actual needs to achieve the purpose of the solution of the present disclosure. It may be understood and implemented by those skilled in the art without creative work.

Correspondingly, the present disclosure further provides a computer readable storage medium storing computer programs thereon, where the programs, when executed by a processor, cause the processor to perform the method for data transmission of the terminal side.

Correspondingly, the present disclosure further provides a computer readable storage medium storing computer programs thereon, where the programs, when executed by a processor, cause the processor to perform the method for data transmission of the base station side.

Correspondingly, the present disclosure also provides an electronic device, including:
a processor; and
a memory for storing instructions executable by the processor;
where the instructions, when executed by the processor, cause the processor to perform the method for data transmission of the terminal side.

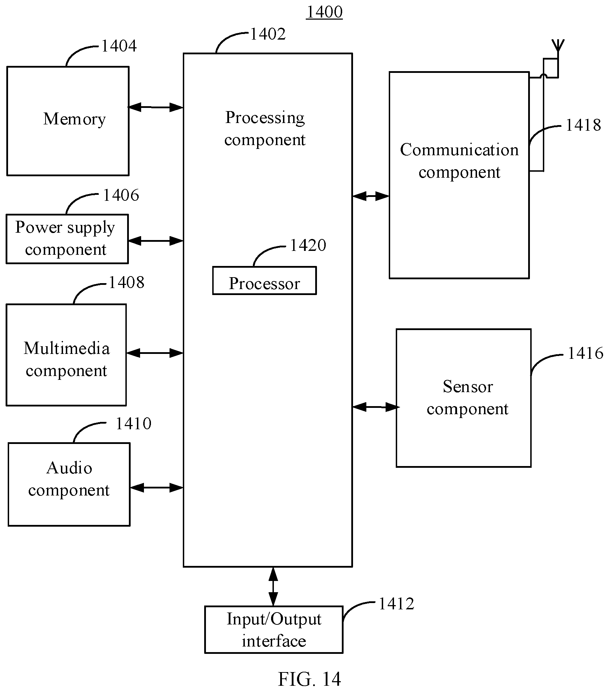

FIG. 14 is a structural schematic diagram illustrating an electronic device 1400 according to an embodiment of the present disclosure. For example, the electronic device 1400 may be a mobile phone, a tablet computer, an e-book reader, a multimedia player, a wearable device, a vehicle-mounted terminal, an ipad, a smart TV or other terminal.

Referring to FIG. 14, the electronic device 1400 may include one or more of the following components: a processing component 1402, a memory 1404, a power supply component 1406, a multimedia component 1408, an audio component 1410, an input/output (I/O) interface 1412, a sensor component 1416, and a communication component 1418.

The processing component 1402 generally controls the overall operation of the electronic device 1400, such as operations associated with displays, phone calls, data communications, camera operations, and recording operations. The processing component 1402 may include one or more processors 1420 to execute instructions to complete all or a part of the blocks of the above data transmission methods. Further, the processing component 1402 may include one or more modules to facilitate interaction between the processing component 1402 and another component. For example, the processing component 1402 may include a multimedia module to facilitate the interaction between the multimedia component 1408 and the processing component 1402. For another example, the processing component 1402 may read executable instructions from the memory to perform steps in the data transmission method provided in an example as described above.

The memory 1404 is configured to store different types of data to support operation at the electronic device 1400. Examples of such data include instructions, contact data, phonebook data, messages, pictures, videos, and so on for any application or method that operates on the electronic device 1400. The memory 1404 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or a CD.

The power supply component 1406 provides power to different assemblies of the electronic device 1400. The power supply component 1406 may include a power source management system, one or more power sources and other assemblies associated with generating, managing and distributing power for the electronic device 1400.

The multimedia component 1408 includes a display screen that provides an output interface between the electronic device 1400 and a user. In some examples, the multimedia component 1408 may include a front camera and/or a rear camera. When the electronic device 1400 is in an operating mode, such as in a shooting mode or a video mode, the front camera and/or the rear camera may receive external multimedia data. Each of the front camera and the rear camera may be a fixed optical lens system or be of a focal length and a capability of an optical zoom.

The audio component 1410 is configured to output and/or input an audio signal. For example, the audio component 1410 includes a microphone (MIC). When the electronic device 1400 is in an operating mode, for example, in a call mode, a recording mode or a speech recognition mode, the microphone is configured to receive an external audio signal. The received audio signal may be further stored in the memory 1404 or sent via the communication component 1418. In some embodiments, the audio component 1410 also includes a speaker for outputting an audio signal.

The I/O interface 1412 provides an interface between the processing component 1402 and a peripheral interface module. The peripheral interface module may be a keyboard, a click wheel, a button and the like. Such buttons may include but not limited to: a home button, a volume button, a start button and a lock button.

The sensor component 1416 includes one or more sensors for evaluating states of the electronic device 1400 in different aspects. For example, the sensor component 1416 may detect the on/off status of the electronic device 1400, and relative positioning of component, for example, the component is a display and a keypad of the electronic device 1400. The sensor component 1416 may also detect a change in position of the electronic device 1400 or a component of the electronic device 1400, a presence or absence of the contact between a user and the electronic device 1400, an orientation or an acceleration/deceleration of the electronic device 1400, and a change in temperature of the electronic device 1400. The sensor component 1416 may include a proximity sensor configured to detect presence of a nearby object without any physical contact. The sensor component 1416 may also include an optical sensor, such as a CMOS or CCD image sensor used in an imaging application. In some embodiments, the sensor component 1416 may also include an acceleration sensor, a gyroscope sensor, a magnetic sensor, a pressure sensor, or a temperature sensor.

The communication component 1418 is configured to facilitate wired or wireless communication between the electronic device 1400 and other devices. The electronic device 1400 may access a wireless network based on a communication standard, such as Wi-Fi, 2G, 3G, 4G or 5G, or a combination thereof. In some embodiments, the communication component 1418 may receive a broadcast signal or broadcast-related information from an external broadcast management system via a broadcast channel. In an example, the communication component 1418 may also include a near field communication (NFC) module to facilitate short-range communications. For example, the NFC module may be implemented based on a radio frequency identification (RFID) technology, an infrared data association (IrDA) technology, an ultra wide band (UWB) technology, a bluetooth (BT) technology and other technologies.

**In** some illustrative embodiments, the electronic device 1400 may be implemented by one or more of an application -specific integrated circuit (ASIC), a digital signal processor (DSP), a digital signal processing device (DSPD), programmable logical device (PLD), field programmable gate array (FPGA), a controller, microcontroller, a microprocessor or other electronic components to implement the method for data transmission.

In an example embodiment, there is also provided a non-transitory machine readable storage medium including instructions, such as a memory 1404 including instructions, where the instructions are executable by the processor 1420 of the electronic device 1400 to implement the method for data transmission. For example, the non-transitory computer readable storage medium may be a read-only memory (ROM), a random access memory (RAM), a CD-ROM, a magnetic tape, a floppy disk and an optical data storage device, etc.

Correspondingly, the present disclosure also provides a network device, including:
a processor; and
a memory for storing instructions executable by the processor;
where the instructions, when executed by the processor, cause the processor to perform the method for data transmission of the base station side.

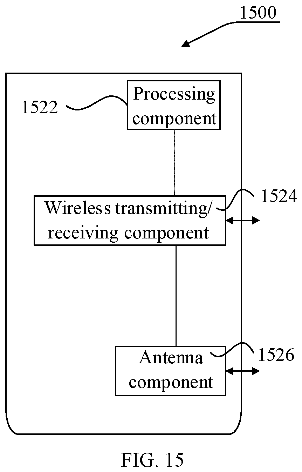

As illustrated in FIG. 15, FIG. 15 is a structural schematic diagram of a device 1500 for data transmission according to an embodiment. The device 1500 may be provided as a base station. Referring to FIG. 15, the device 1500 includes a processing component 1522, a wireless transmitting/receiving component 1524, an antenna component 1526, and a signal processing portion specific to a wireless interface. The processing component 1522 may further include one or more processors.

One of the processors in the processing component 1522 may be configured to execute any one of the methods for data transmission.

After considering the specification and practicing the present disclosure, a person skilled in the art would easily conceive of other implementations of the present disclosure. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the disclosure is to be limited only by the appended claims.

## Claims

1. A method for data transmission, performed by a terminal and comprising:
determining a first data transmission direction corresponding to a first subband and configured or indicated by a base station for the terminal on a first time unit, wherein the first time unit is a time unit, with data transmission direction being flexible, preconfigured by the base station;
determining a second data transmission direction, for the first time unit, indicated by the base station through a slot format indication (SFI);
in response to determining that the first data transmission direction is different from the second data transmission direction, determining a first behavior of the terminal in the first time unit; and
performing the first behavior in the first time unit.

2. The method of claim 1, wherein determining the first behavior of the terminal in the first time unit comprises:
determining that the terminal neglects an indication of the SFI in the first time unit, and performing, based on the first data transmission direction, data transmission on the first subband.

3. The method of claim 1, wherein determining the first behavior of the terminal in the first time unit comprises:
in response to first information transmitted on the first subband being indicated or scheduled by the base station through a dynamic signaling, determining that the terminal neglects an indication of the SFI in the first time unit, and performing, based on the first data transmission direction, data transmission on the first subband.

4. The method of claim 3, wherein the dynamic signaling is any one of:
downlink control information (DCI); and
media access control control element (MAC CE).

5. The method of any one of claims 2 to 4, wherein performing the first behavior in the first time unit comprises any one of:
in response to the SFI indicating the second data transmission direction as downlink and the first data transmission direction configured or indicated by the base station being uplink, neglecting the indication of the SFI and transmitting data on the first subband;
in response to the SFI indicating the second data transmission direction as uplink and the first data transmission direction configured or indicated by the base station being downlink, neglecting the indication of the SFI and receiving data on the first subband;
in response to the SFI indicating the second data transmission direction as flexible and the first data transmission direction configured or indicated by the base station being uplink, neglecting the indication of the SFI and transmitting data on the first subband; and
in response to the SFI indicating the second data transmission direction as flexible and the first data transmission direction configured or indicated by the base station being downlink, neglecting the indication of the SFI and receiving data on the first subband.

6. The method of claim 1, wherein determining the first behavior of the terminal in the first time unit comprises:
performing, based on the second data transmission direction indicated by the SFI, data transmission and discarding data transmission configured or indicated by the base station on the first subband.

7. The method of claim 1, wherein determining the first behavior of the terminal in the first time unit comprises:
in response to the first information transmitted on the first subband being semi-statically configured by the base station through a radio resource control (RRC) signaling, performing, based on the second data transmission direction indicated by the SFI, data transmission and discarding the data transmission configured or indicated by the base station on the first subband.

8. The method of claim 6 or 7, wherein performing the first behavior in the first time unit comprises any one of:
in response to the SFI indicating the second data transmission direction as downlink and the first data transmission direction configured or indicated by the base station being uplink, determining that the terminal receives data based on the indication of the SFI in the first time unit, and discarding an uplink channel transmitted on the first subband;
in response to the SFI indicating the second data transmission direction as uplink and the first data transmission direction configured or indicated by the base station being downlink, determining that the terminal transmits data based on the indication of the SFI in the first time unit, and discarding a downlink channel transmitted by the base station on the first subband;
in response to the SFI indicating the second data transmission direction as flexible and the first data transmission direction configured or indicated by the base station being uplink, not transmitting or receiving data in the first time unit; and
in response to the SFI indicating the second data transmission direction as flexible and the first data transmission direction configured or indicated by the base station being downlink, not transmitting or receiving data in the first time unit.

9. A method for data transmission, performed by a base station and comprising:
determining a first data transmission direction corresponding to a first subband and configured or indicated for a terminal on a first time unit, wherein the first time unit is a time unit, with data transmission direction being flexible, preconfigured by the base station;
indicating, by a slot format indication (SFI), a second data transmission direction in the first time unit;
in response to determining that the first data transmission direction is different from the second data transmission direction, determining a second behavior of the base station in the first time unit; and
performing the second behavior in the first time unit.

10. The method of claim 9, wherein determining the second behavior of the base station in the first time unit comprises:
determining that the base station performs data transmission on the first subband based on the first data transmission direction in the first time unit.

11. The method of claim 9, wherein determining the second behavior of the base station in the first time unit comprises:
in response to the base station, by a dynamic signaling, indicating or scheduling first information transmitted on the first subband, determining that the base station performs data transmission on the first subband based on the first data transmission direction in the first time unit.

12. The method of claim 11, wherein the dynamic signaling is any one of:
downlink control information (DCI); and
media access control control element (MAC CE).

13. The method of any one of claims 10 to 12, wherein performing the second behavior in the first time unit comprises any one of:
in response to the SFI indicating the second data transmission direction as downlink and the first data transmission direction configured or indicated by the base station being uplink, receiving data on the first subband;
in response to the SFI indicating the second data transmission direction as uplink and the first data transmission direction configured or indicated by the base station being downlink, transmitting data on the first subband;
in response to the SFI indicating the second data transmission direction as flexible and the first data transmission direction configured or indicated by the base station being uplink, receiving data on the first subband; and
in response to the SFI indicating the second data transmission direction as flexible and the first data transmission direction configured or indicated by the base station being downlink, transmitting data on the first subband.

14. The method of claim 9, wherein determining the second behavior of the base station in the first time unit comprises:
determining that the base station performs data transmission based on the second data transmission direction in the first time unit.

15. The method of claim 9, wherein determining the second behavior of the base station in the first time unit comprises:
in response to the base station, by a radio resource control (RRC) signaling, semi-statically configuring the first information transmitted on the first subband, determining that the base station performs data transmission based on the second data transmission direction in the first time unit.

16. The method of claim 14 or 15, wherein performing the second behavior in the first time unit comprises any one of:
in response to the SFI indicating the second data transmission direction as downlink and the first data transmission direction configured or indicated by the base station being uplink, transmitting data on the first subband;
in response to the SFI indicating the second data transmission direction as uplink and the first data transmission direction configured or indicated by the base station being downlink, receiving data on the first subband;
in response to the SFI indicating the second data transmission direction as flexible and the first data transmission direction configured or indicated by the base station being uplink, not expecting to transmit or receive specified data in the first time unit, wherein the specified data is data, for transmission, indicated by the base station before transmitting the SFI; and
in response to the SFI indicating the second data transmission direction as flexible and the first data transmission direction configured or indicated by the base station being downlink, not expecting to transmit or receive the specified data in the first time unit.

17. An apparatus for data transmission, applied to a terminal and comprising:
a first determination module, configured to determine a first data transmission direction corresponding to a first subband and configured or indicated by a base station for the terminal on a first time unit, wherein the first time unit is a time unit, with data transmission direction being flexible, preconfigured by the base station;
a second determination module, configured to determine a second data transmission direction, for the first time unit, indicated by the base station through a slot format indication (SFI);
a third determination module, configured to, in response to determining that the first data transmission direction is different from the second data transmission direction, determine a first behavior of the terminal in the first time unit; and
a first performing module, configured to perform the first behavior in the first time unit.

18. An apparatus for data transmission, applied to a base station and comprising:
a second performing module, configured to determine a first data transmission direction corresponding to a first subband and configured or indicated for a terminal on a first time unit, wherein the first time unit is a time unit, with data transmission direction being flexible, preconfigured by the base station;
a third performing module, configured to indicate, by a slot format indication (SFI), a second data transmission direction in the first time unit;
a fourth determination module, configured to, in response to determining that the first data transmission direction is different from the second data transmission direction, determine a second behavior of the base station in the first time unit; and
a fourth performing module, configured to perform the second behavior in the first time unit.

19. A computer-readable storage medium, storing computer programs thereon, wherein the computer programs, when executed by a processor, cause the processor to perform the method for data transmission of any one of claims 1 to 8.

20. A computer-readable storage medium, storing computer programs thereon, wherein the computer programs, when executed by a processor, cause the processor to perform the method for data transmission of any one of claims 9 to 16.

21. An electronic device, comprising:
a processor; and
a memory storing instructions executable by the processor;
wherein the instructions, when executed by the processor, cause the processor to perform the method for data transmission of any one of claims 1 to 8.

22. An electronic device, comprising:
a processor; and
a memory storing instructions executable by the processor;
wherein the instructions, when executed by the processor, cause the processor to perform the method for data transmission of any one of claims 9 to 16.
